# EUROPÄISCHE PATENTANMELDUNG

(11) **EP 1 803 518 A2**
(43) Veröffentlichungstag der Anmeldung: **04.07.2007**
(21) Anmeldenummer: 06026665.7
(22) Anmeldetag: 22.12.2006
(51) Int. Cl.: B23F 23/12

(54) **Werkzeugkopf zur Aufnahme und zum Antrieb der Drehbewegung eines zweiseitig zu lagernden Werkzeuges sowie Werkzeug zum Einsatz in einem solchen Werkzeugkopf**

(30) Priorität: 03.01.2006 DE 102006001026
(71) Anmelder: GLEASON-PFAUTER, Maschinenfabrik GmbH, 71636 Ludwigsburg (DE)
(72) Erfinder: Gross, Andreas, 71672 Marbach (DE); Pfeiffer, Klaus, Dr., 8304 Wallisellen (CH); Kleinbach, Kurt, Dr., 71717 Beilstein (DE)
(74) Vertreter: Kohl, Karl-Heinz

(57) **Zusammenfassung**

Das Werkzeug (4) weist in der Nähe seiner Enden Zentrierflächen (9, 10)auf, die in drehbar ausgebildete Aufnahmebuchsen passen. Die eine von ihnen ist in einem Antriebsschlitten (2) und die andere in einem Gegenlager (74) fluchtend zueinander angeordnet. Das Gegenlager (74) ist Teil eines Gegenlagerschlittens (3), der zur Aufnahme des Werkzeuges (4) so weit auf den Antriebsschlitten (2) zu verschiebbar ist, daß das zwischen den Schlitten (2, 3) befindliche Werkzeug (4) mit den Zentrierflächen (9,10) in den Buchsen (11, 12) gehalten wird und dabei eine voreingestellte Axialkraft vorliegt. Ein Drehantriebsmotor (33) ist über eine im Antriebsschlitten (2) gelagerte Werkzeugspindel (13) und eine formschlüssige Kupplung (56) mit dem Werkzeug (4) verbunden. Das Werkzeug (4) ist als Schaftwerkzeug ausgebildet und im wesentlichen symmetrisch bezüglich einer Ebene senkrecht zur Drehachse in der Mitte eines Verzahnungshüllkörpers ausgebildet. Der Abstand der Zentrierfläche (9, 10) vom Verzahnungshüllkörper auf der Antriebsseite ist so klein, wie der entsprechende Abstand auf der Gegenlagerseite mindestens sein muß. Der Werkzeugkopf wird beispielsweise für scheiben- oder schneckenförmige Werkzeuge (4) zum Bearbeiten zylindrischer Zahnräder benötigt.

## Beschreibung

Die Erfindung betrifft einen Werkzeugkopf zur Aufnahme und zum Antrieb der Drehbewegung eines zweiseitig zu lagernden Werkzeuges nach den Oberbegriffen der Ansprüche 1 und 7 sowie ein Werkzeug zum Einsatz in einem solchen Werkzeugkopf nach dem Oberbegriff des Anspruches 9.

Derartige Werkzeugköpfe werden zum Beispiel benötigt für scheiben- oder schneckenförmige Werkzeuge zum Bearbeiten zylindrischer Zahnräder. Zur Aufnahme und zum Antrieb des Werkzeuges werden vielfach Spannzangen verwendet, die jedoch empfindlich gegen Verschmutzung, Verschleiß und Beschädigung sind. Spannzangen sind zudem geometrisch aufwendig und benötigen enge Fertigungstoleranzen. Bei großen zu übertragenden Drehmomenten ist zum Teil zusätzlich ein Formschluss erforderlich. Für die Werkzeuge sind komplizierte Gegenlager erforderlich; diese besitzen meist nur geringe Steifigkeit. Zum Einspannen der Werkzeuge werden hohe Spannkräfte benötigt, weil die Werkzeuge zumindest bei höheren Ansprüchen an die Laufgenauigkeit der Werkzeuge kraftschlüssig angetrieben werden. Da in Richtung der Werkzeugdrehachse Raum für eine Einrichtung zum Erzeugen bzw. Lösen der Werkzeugspannkraft erforderlich ist, ist auch eine große Baulänge notwendig. Für die Montage und Wartung des für die Regelung der Werkzeugdrehung erforderlichen Winkelmeßsystems ergeben sich deshalb ungünstige räumliche Verhältnisse.

Der Erfindung liegt die Aufgabe zugrunde, den gattungsgemäßen Werkzeugkopf und das gattungsgemäße Werkzeug so auszubilden, dass der Werkzeugkopf ohne den Nachteil der Spannzangen robust und zuverlässig ist, eine hohe Laufgenauigkeit des Werkzeuges ermöglicht, ein steifes Gegenlager bietet, nur eine kurze Baulänge hat und günstige Verhältnisse für die Montage und die Wartung eines Winkelmesssystems bietet.

Diese Aufgabe wird beim gattungsgemäßen Werkzeugkopf erfindungsgemäß mit den kennzeichnenden Merkmalen der Ansprüche 1 und 7 und beim gattungsgemäßen Werkzeug erfindungsgemäß mit den kennzeichnenden Merkmalen des Anspruches 9 gelöst.

Beim erfindungsgemäßen Werkzeugkopf ist das Gegenlager Teil eines Gegenlagerschlittens, der zur Aufnahme des Werkzeuges in Richtung auf den Antriebsschlitten so verschoben werden kann, dass das Werkzeug mit seinen Zentrierflächen zwischen den beiden Schlitten in den Buchsen gehalten wird. Dabei liegt eine voreingestellte Axialkraft vor. Der Drehantriebsmotor ist über die im Antriebsschlitten gelagerte Werkzeugspindel und eine formschlüssige Kupplung mit dem Werkzeug verbunden. Aufgrund dieser Ausbildung ergibt sich infolge des Verzichtes auf eine Spannzange eine kompakte Ausbildung des Werkzeugkopfes mit einer hohen Laufgenauigkeit des Werkzeuges. Das Gegenlager enthält, verglichen mit dem Stand der Technik, nur wenige Bauelemente; es lässt sich deshalb besonders steif ausbilden. Für die Montage und die Wartung des Winkelmeßsystems ergeben sich günstige Verhältnisse.

Bei der vorgeschlagenen Lösung kann die Antriebsspindel einen geringeren Durchmesser erhalten als es beim Stand der Technik erforderlich ist. Dies ist darauf zurückzuführen, dass einerseits bei der vorgeschlagenen Lösung anstelle einer Spannzange eine raumsparende formschlüssige Kupplung eingesetzt wird und andererseits beim Arbeiten mit Spannzange größere Spannkräfte erforderlich sind.

Der Antriebsschlitten kann deshalb werkzeugseitig kleiner als dem Stand der Technik entsprechend dimensioniert werden. Dadurch wird es möglich, den aktiven Bereich des Werkzeuges näher an die Spindelnase zu bringen, ohne dass der Antriebsschlitten mit Werkstück oder Aufspannung kollidiert.

Aufgrund der Tatsache, dass die vorgeschlagene Lösung nicht mit einem feststehenden Gegenlager mit Pinole, sondern mit einem Gegenlagerschlitten arbeitet, erlaubt die vorgeschlagene Lösung unterschiedliche Werkzeuge einzusetzen, die sich in ihrer Länge sehr deutlich unterscheiden.

Das Gegenlager selbst besteht aus nur wenigen Elementen; es lässt sich deshalb besonders steif ausführen.

Dem Stand der Technik entsprechend besitzen die z. Z. besonders häufig eingesetzten Schaftwerkzeuge, also die Werkzeuge, die nicht über einen separaten Dorn mit der Antriebsspindel verbunden werden, auf der Antriebsseite zwischen Verzahnung und Aufnahmefläche einen größeren Abstand als auf der Gegenlagerseite. Die vorgeschlagene Lösung nach Anspruch 9 erlaubt es jedoch aufgrund der vorstehenden Ausführungen, die Werkzeuge symmetrisch und mit geringem Abstand zwischen Verzahnung und den Aufnahmeflächen auszubilden. Symmetrie bedeutet im Bereich der Verzahnung natürlich nicht Symmetrie bezüglich der einzelnen Zähne, sondern Symmetrie bezüglich des Verzahnungshüllkörpers.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: eine Ansicht eines erfindungsgemäßen Werkzeugkopfes mit eingespanntem Werkzeug
- Fig. 2: einen Horizontalschnitt des erfindungsgemäßen Werkzeugkopfes durch die Drehachse des Werkzeuges,
- Fig. 3: im Schnitt einen Antrieb der Gewindespindel zum Verschieben von Gegenlager- und Antriebsschlitten gegeneinander,
- Fig. 4: eine Einrichtung zum Einstellen der Axialkraft zwischen dem Werkzeug und den beiden Schlitten des erfindungsgemäßen Werkzeugkopfes,
- Fig. 5: teilweise in Ansicht und teilweise im Schnitt eine formschlüssige Kupplung zwischen der Werkzeugspindel und dem Werkzeug des erfindungsgemäßen Werkzeugkopfes,
- Fig. 6: eine Ansicht der formschlüssigen Kupplung gemäß Fig. 5,
- Fig. 7: in perspektivischer Darstellung ein Druckstück der formschlüssigen Kupplung gemäß Fig. 5,
- Fig. 8: in Seitenansicht das im erfindungsgemäßen Werkzeugkopf aufgenommene Werkzeug mit werkzeugseitigem Teil der Kupplung nach Fig. 5,
- Fig. 9: eine Stirnansicht des Werkzeuges gemäß Fig. 8 mit werkzeugseitigem Teil der Kupplung nach Fig. 5,
- Fig. 10: das Werkzeug gemäß Fig. 8 in einer um 90° um seine Achse gedrehten Stellung mit werkzeugseitigem Teil der Kupplung nach Fig. 5,
- Fig. 11a bis Fig. 11c: unterschiedliche Ausführungsformen der Kupplung gemäß den Fig. 5 und 6.

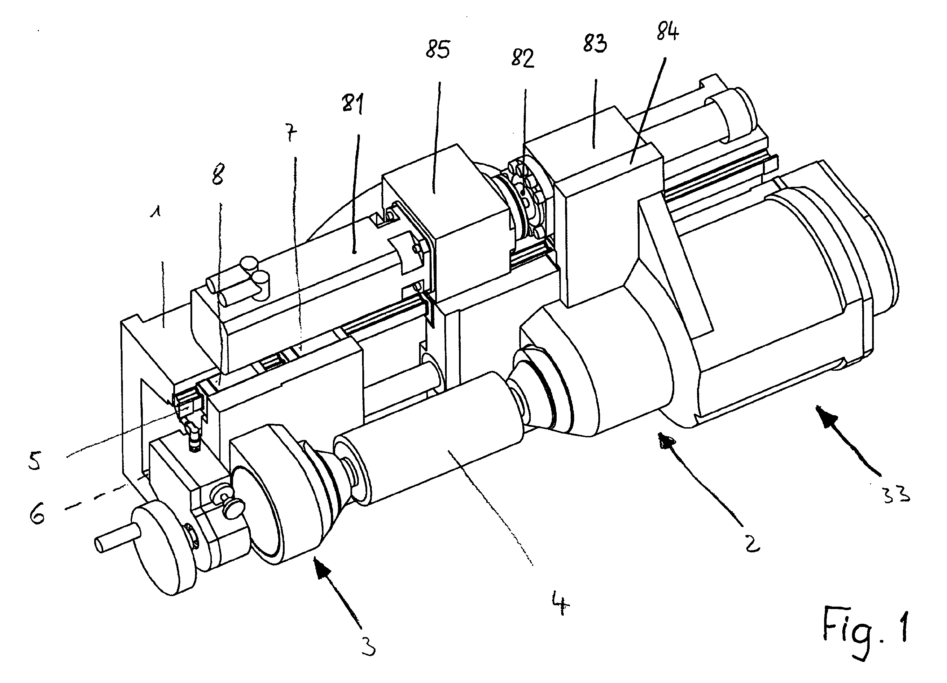

Der Werkzeugkopf enthält ein Gehäuse 1, an dem zwei parallel verlaufende lineare Führungsbahnen angebracht sind, die in unterschiedlicher Höhe liegen. In Fig. 1 ist nur die obere Führungsbahn 5 zu erkennen; die untere Führungsbahn 6 ist verdeckt.

Auf den Führungsbahnen 5, 6 sind ein Antriebsschlitten 2 und ein Gegenlagerschlitten 3 verschiebbar angeordnet. Zur Verbindung der beiden Schlitten 2, 3 mit den Führungsbahnen 5, 6 dienen je Schlitten vier Rollenumlaufschuhe, zwei für die Verbindung mit der oberen Führungsbahn 5 und zwei für die Verbindung mit der unteren Führungsbahn 6. In Fig. 1 sind lediglich die beiden Rollenumlaufschuhe 7 und 8, über die der Gegenlagerschlitten 3 mit der oberen Führungsbahn 5 verbunden ist, zu erkennen. Die übrigen Rollenumlaufschuhe sind verdeckt.

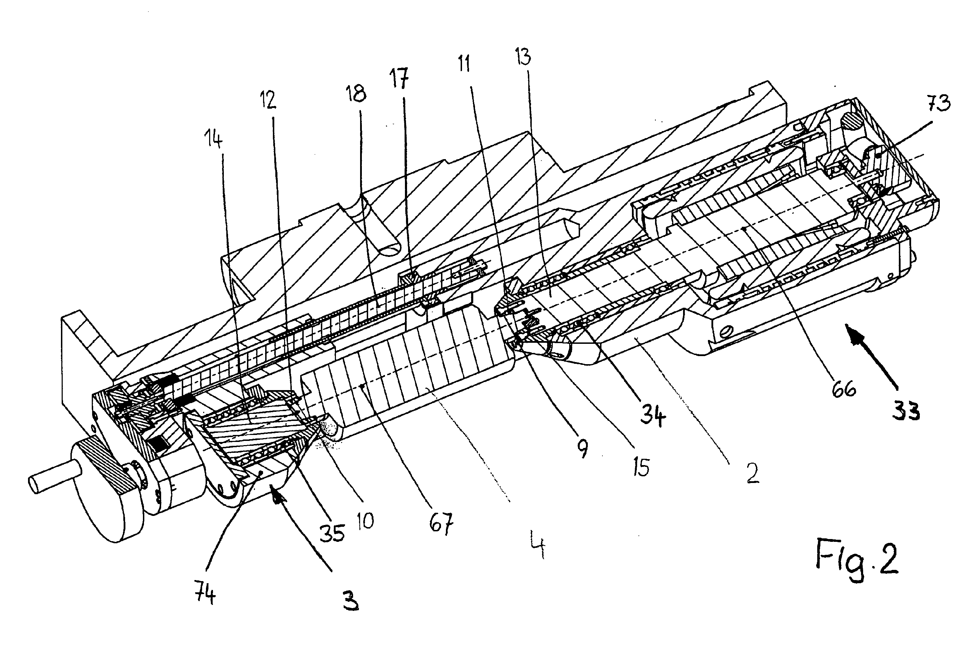

Der Werkzeugkopf nimmt ein Werkzeug 4 auf, das in der Nähe seiner beiden Enden kegelige Zentrierflächen 9 werkzeugseitig und 10 gegenlagerseitig aufweist; diese passen in entsprechend ausgebildete Innenflächen von Kegelbuchsen 11 und 12. Die Kegelbuchse 11 ist mit einer Antriebsspindel 13 und die Kegelbuchse 12 mit einer Gegenlagerspindel 14 drehfest verbunden, vorzugsweise verschraubt. Eine der Schrauben zur Befestigung der Kegelbuchse 11 ist mit 15 (Fig. 2) bezeichnet Die Schrauben zur Befestigung der Kegelbuchse 12 sind nicht dargestellt. Zur Drehung der Antriebsspindel 13 dient ein Drehantriebsmotor 33 (Fig. 1 und 2).

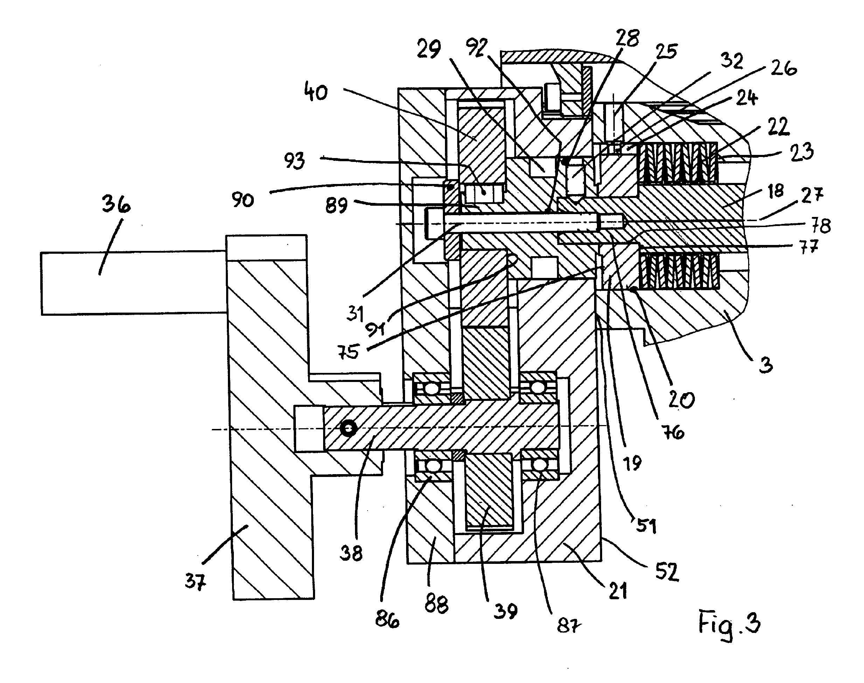

Am Antriebsschlitten 2 ist eine Spindelmutter 17 befestigt, in die eine im Gegenlagerschlitten 3 gelagerte Gewindespindel 18 eingreift (Fig. 2). Die Gewindespindel 18 ist am linken Ende im Durchmesser verkleinert, so dass sich ein zylindrischer Zapfen 76 und eine Schulter 77 bilden (Fig. 3). Auf dem Zapfen 76 befindet sich ein Druckring 19; dieser wird über ein Verriegelungsgrundelement 28 an die Schulter 77 angelegt. Das Verriegelungsgrundelement 28 ist über Schrauben 31, 32 mit der Gewindespindel 18 verbunden.

Der Druckring 19 besitzt am Außenzylinder eine axiale Längsnut 24. In diese Längsnut ragt ein Gewindestift 25 mit einem zylindrischen Zapfen 26 vom Gegenlagerschlitten 3 aus hinein und verhindert so eine Drehung des Druckringes 19; dieser kann sich somit nur in Richtung der Drehachse 27 der Gewindespindel 18 bewegen. Die Verbindung zwischen Gewindespindel 18, Druckring 19 und Verriegelungsgrundelement 28 erlaubt, die Gewindespindel 18 in der Bohrung 78 des Druckringes 19 zu drehen. Der Druckring 19 stützt sich über wenigstens eine Feder 22, die im Ausführungsbeispiel ein Tellerfederpaket ist, an einer radialen Anlagefläche 23 ab, die in einer axialen Bohrung 20 im Gegenlagerschlitten 3 vorgesehen ist.

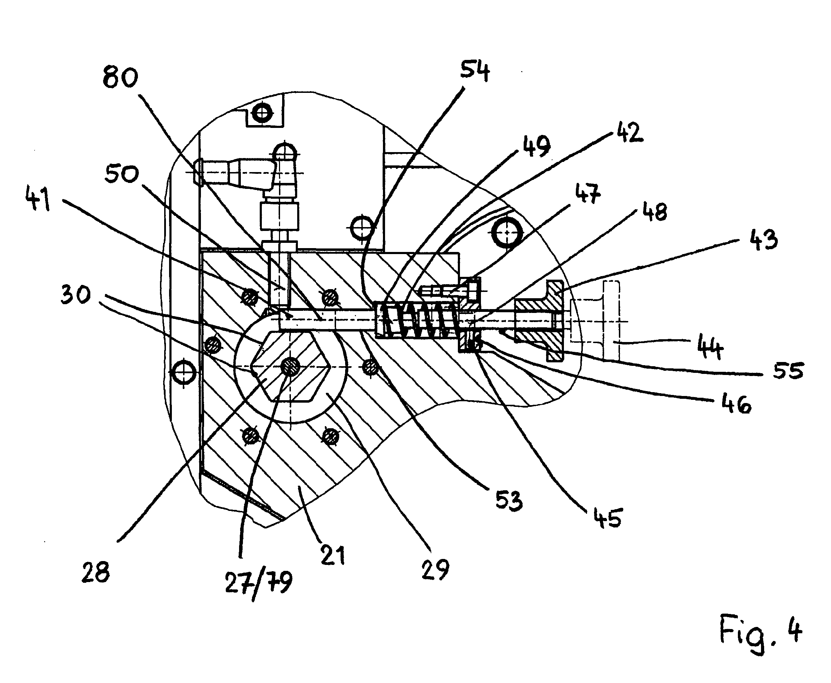

Die Kraft, mit der die Feder 22 auf die Anlagefläche 23 am Gegenlagerschlitten 3 drückt, nimmt zu, je weiter der Druckring 19 die Feder 22 zusammendrückt. Bei Montage des Gegenlagerschlittens 3 werden die Tiefe der Bohrung 20, die Breite des Druckringes 19 im Bereich der äußeren stirnseitigen Anlagefläche 75 und die Länge der Feder 22 im zusammengedrückten Zustand so abgestimmt, dass die Federkraft einen gewünschten Wert annimmt, wenn Länge der zusammengedrückten Feder 22 plus axiale Breite des Druckringes 19 im Bereich der äußeren Anlagefläche 75 gleich der Tiefe der Bohrung 20 ist. Nach dieser Abstimmung liegen also die äußere Anlagefläche 75 des Druckringes 19 und eine radiale Anlagefläche 51 des Gegenlagerschlittens 3 in einer gemeinsamen Ebene. Der Gegenlagerschlitten 3 liegt mit seiner die Anlagefläche 51 bildenden Stirnseite an der Stirnseite 52 eines Verriegelungsgehäuses 21 an. Es nimmt das Verriegelungsgrundelement 28 auf, das an seiner Außenseite mit einer Verriegelungsnut 29 versehen ist (Fig. 3 und 4).

Wenn die äußere Anlagefläche 75 des Druckringes 19 und die Anlagefläche 51 des Gegenlagerschlittens 3 in der gemeinsamen Ebene liegen, nimmt die Verriegelungsnut 29 eine bestimmte Position in Richtung der Drehachse 27 der Gewindespindel 18 ein. In diese Nut 29 soll eine Verriegelungsstange 41 eingeführt werden (Fig. 4). Diese Verriegelungsstange 41 ist in einer Bohrung 53 im Verriegelungsgehäuse 21 verschiebbar angeordnet. Die Position dieser Bohrung 53 in Richtung der Drehachse 27 der Gewindespindel 18 ist gegenüber der Position der Verriegelungsnut 29 bei Anlage der äußeren Anlagefläche 75 des Druckringes 19 an der Anlagefläche 52 des Verriegelungsgehäuses 21 um einen geringen Betrag in Fig. 3 nach rechts beziehungsweise senkrecht zur Zeichenebene in Fig. 4 nach unten verschoben, sodass die Verriegelungsstange 41 nicht in die Verriegelungsnut 29 eingeführt werden kann.

Im Verriegelungsgehäuse 21 ist ein Zahnradgetriebe 39, 40 untergebracht. Es hat ein zylindrisches Zahnrad 39, das drehfest auf einer Welle 38 sitzt, die mit Lagern 86, 87 im Verriegelungsgehäuse 21 und einem das Verriegelungsgehäuse 21 abschließenden Deckel 88 drehbar abgestützt ist. Auf dem nach außen über den Deckel 88 ragenden Ende der Welle 38 sitzt drehfest ein Handrad 37 mit einem Griff 36.

Im Verriegelungsgehäuse 21 kämmt das Zahnrad 39 mit dem zylindrischen Zahnrad 40. Dieses sitzt auf einem Zapfen 89 des Verriegelungsgrundelementes 28 und ist unter Verwendung einer Passfeder 93 gegen Verdrehen gesichert. Das Verriegelungsgrundelement 28 besitzt eine Bohrung 92 und eine axiale Anlagefläche 91, an der das Zahnrad 40 anliegt. Die Schraube 31 ist durch die Bohrung 92 des Verriegelungsgrundelementes 28 geführt und mit der Gewindespindel 18 verschraubt; sie verbindet dabei über die Unterlegscheibe 90 das Zahnrad 40 und das Verriegelungsgrundelement 28 mit der Gewindespindel 18. Zusätzlich verhindert eine Schraube 32 Drehen des Verriegelungsgrundelementes 28 zur Gewindespindel 18.

Dreht man über den Griff 36 am Handrad 37, so gelangt diese Drehung über die Welle 38, die zylindrischen Zahnräder 39, 40 und das Verriegelungsgrundelement 28 auf die Gewindespindel 18. Die Gewindespindel 18 schraubt sich dabei in die Spindelmutter 17 und zieht so den Gegenlagerschlitten 3 auf den Antriebsschlitten 2 zu. Befindet sich ein Werkzeug 4 zwischen den Kegelbüchsen 11 und 12, so wird aufgrund des Verschiebens des Gegenlagerschlittens 3 zunächst das Spiel zwischen den kegeligen Zentrierflächen 9,10 und den Kegelbüchsen 11, 12 beseitigt. Bei weiterem Drehen an Handrad 37 baut sich in der Werkzeugaufnahme eine Spannkraft auf.

Diese Kraft steigt so lange an, bis Spannkraft plus Reibkraft gleich der Vorspannkraft der Feder 22 ist.

Bei weiterem Drehen wird die Feder 22 zusammengedrückt. Dabei wandern der Druckring 19 und das Verriegelungsgrundelement 28 mit der Verriegelungsnut 29 in Figur 3 nach rechts. Sobald die Nut 29 dabei die Position der Bohrung 53 im Verriegelungsgehäuse 21 erreicht hat, kann die Verriegelungsstange 41 in die Verriegelungsnut 29 eingeführt werden.

Die Verriegelungsstange 41 kann normalerweise allerdings in Fig.4 nicht soweit nach links geschoben werden, dass ein Bund 49 der Verriegelungsstange 41 an einer Planfläche 54 im Verriegelungsgehäuse 21 anliegt, weil die Verriegelungsstange 41 im Fuß der Verriegelungsnut 29 anstößt. Im Fuß der Nut 29 sind im Ausführungsbeispiel sechs gleichmäßig am Umfang der Nut verteilte ebene Verriegelungsflächen 30 angebracht. Diese Flächen haben jeweils den gleichen Abstand von der Achse 79 des Verriegelungsgrundelementes 28. Die Verriegelungsstange 41 kann nur in die linke Endposition in Fig. 4 verschoben werden, wenn eine der Verriegelungsflächen 30 parallel zur Achse 80 der Verriegelungsstange 41 positioniert ist. Durch Drehen an Handrad 37 lässt sich eine derartige Position einfach und genau einstellen. In dieser Position drückt eine Verriegelungsfeder 42 die Verriegelungsstange 41 in die linke Endposition. Diese Position wird von einem Endschalter 50 erfasst und daraus das Signal "Werkzeug gespannt" abgeleitet. Die Verriegelungsfeder 42 umgibt die Verriegelungsstange 41 und stützt sich mit einem Ende am Bund 49 und mit dem anderen Ende an einer Scheibe 46 ab, die am Verriegelungsgehäuse 21 befestigt ist. Die Verriegelungsstange 41 ragt durch die Scheibe 46 nach außen und trägt einen Verriegelungsgriff 43.

In Figur 4 ist die Arbeitsposition der Verriegelungsstange 41 in vollen Linien dargestellt. Die Verriegelungsstange 41 wird in dieser Position über die Verriegelungsfeder 42, die sich am Bund 49 einerseits und an der Scheibe 46 andererseits abstützt, in ihrer linken Endposition gehalten. In dieser Position liegt die Verriegelungsstange mit dem Bund 49 an der Planfläche 54 im Verriegelungsgehäuse 21 an. Über den Endschalter 50 wird geprüft, ob die Verriegelungsstange 41 die linke Endposition in Figur 4, also die Arbeitsposition, eingenommen hat. Nur in dieser Lage ist das Bearbeiten eines Werkstückes möglich.

Zum Einstellen der Spannkraft wird über den Verriegelungsgriff in Arbeitsposition 43 die Verriegelungsstange 41 gegen die Kraft der Verriegelungsfeder 42 nach rechts verschoben und der Verriegelungsgriff in Einstellposition 44 arretiert. Dazu wird der Griff um einen bestimmten Winkel um seine Längsachse 80 gedreht. Durch diese Drehung gelangt ein Arretierstift 45, der in der Scheibe 46 gelagert ist, in den Bereich einer Ringnut 48 der Verriegelungsstange 41 und verhindert damit die Bewegung der Stange 41 nach links. Während der Bewegung der Verriegelungsstange 41 aus der Arbeitsposition 43 in die Einstellposition 44 befindet sich der Arretierstift 45 in einem Bereich der Verriegelungsstange 41, in dem eine ebene Fläche 55 liegt, die parallel zur Achse 80 der Stange 41 angebracht ist. Die ebene Fläche 55 berührt den Fuß der Ringnut 48, so dass der Arretierstift 45 im Bereich der ebenen Fläche 55 eine Axialbewegung der Stange 41 zulässt, im Bereich der Ringnut 48 diese Bewegung aber verhindert. Die Schraube 47 ist eine der Schrauben, mit denen die Scheibe 46 mit dem Verriegelungsgehäuse 21 verbunden ist.

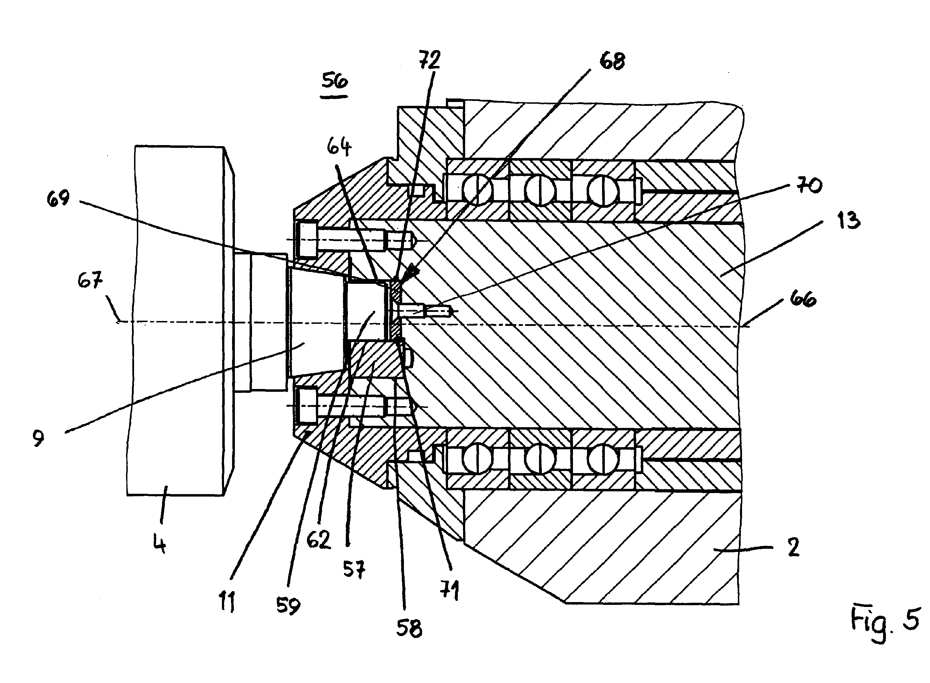

Eine Kupplung 56 (Fig. 5) zwischen Antriebsspindel 13 und Werkzeug 4 besteht aus einem Druckstück 57, das in eine zylindrische Bohrung 58 an der werkzeugseitigen Stirnfläche der Antriebsspindel eingesetzt ist, und einem Zapfen 59, der an der Antriebsseite des Werkzeuges 4 in Verlängerung der kegeligen Zentrierfläche 9 vorgesehen ist.

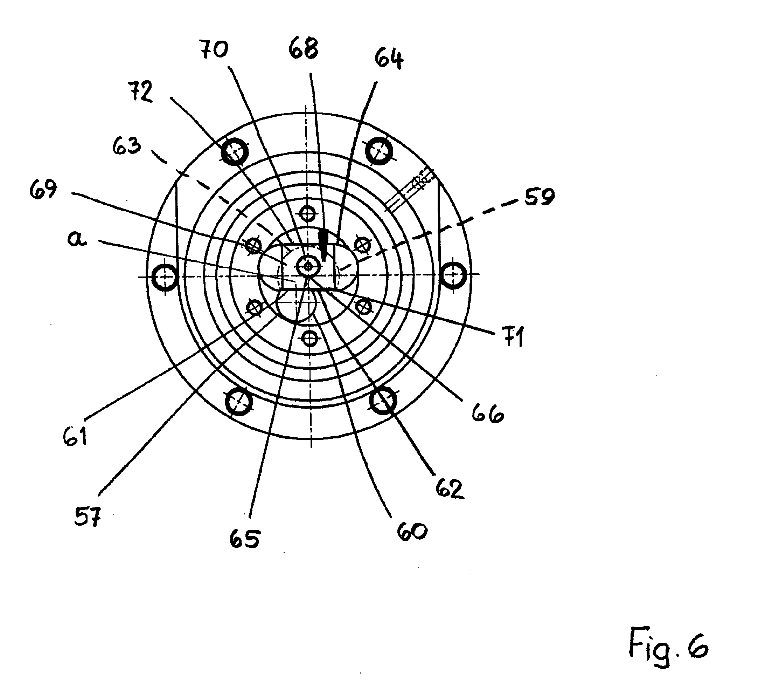

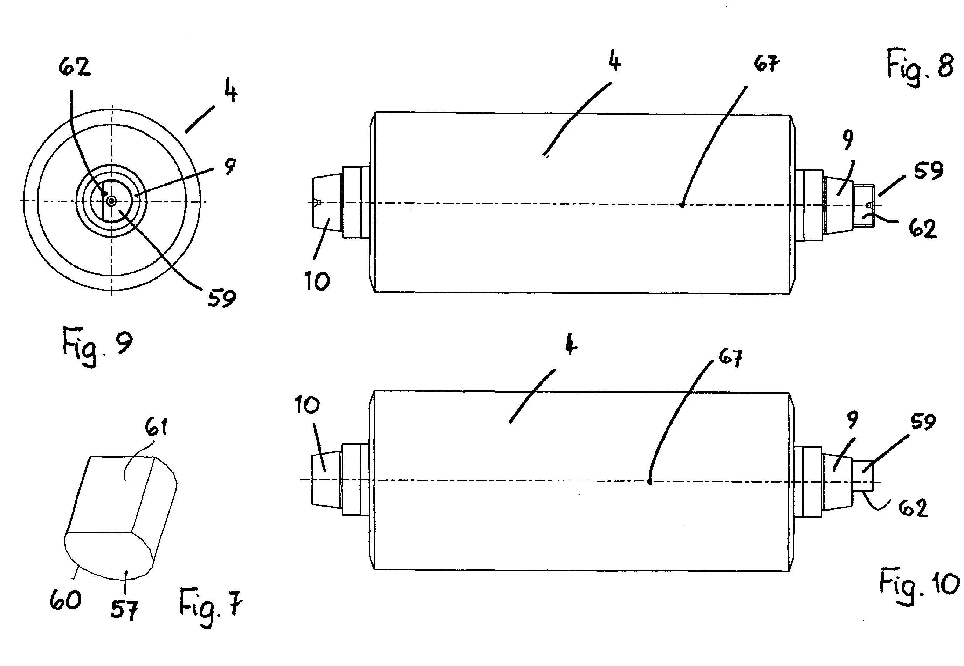

Das Druckstück 57 besitzt eine zylindrische Form, wobei ein Schnitt senkrecht zu einer Mantellinie aus einem Kreissegment besteht (Fig. 6 und 7). Demzufolge enthält das Druckstück 57 einen Teil 60, der kreiszylindrisch ausgebildet ist, und einen Teil, der von einer ebenen Fläche 61 gebildet wird. Diese Ebene 61 verläuft parallel zur Drehachse 66 der Antriebsspindel 13. Die Achse 65 der zylindrischen Bohrung 58 besitzt einen Abstand a von der Drehachse 66 der Antriebsspindel 13. Das Druckstück 57 ist beschichtet, um insbesondere dauerhaft günstige Reibeigenschaften zu erzielen und das Auftreten von Schlagrost sicher zu verhindern.

Auch der Zapfen 59 des Werkzeuges 4 ist zylindrisch ausgeführt. Senkrecht zu einer Mantellinie besitzt auch er die Form eines Kreissegmentes, so dass der Zapfen 59 ebenfalls eine ebene Fläche 62 und eine kreiszylinderförmige Mantelfläche 63 aufweist. Die ebene Fläche 62 verläuft parallel zur Drehachse 67 des Werkzeuges 4.

Im montierten Zustand ragt der Zapfen 59 in eine Vertiefung 64, die ebenfalls an der werkzeugseitigen Stirnfläche der Antriebsspindel 13 angebracht ist. Diese Vertiefung 64 besitzt die Form eines Langloches. Sie ist mit der zylindrischen Bohrung 58 verbunden. Die Kupplung 56 ist so dimensioniert, dass die beiden ebenen Flächen 61 und 62 im Betrieb aneinander anliegen und so das Moment von der Antriebsspindel 13 auf das Werkzeug 4 übertragen.

In der Vertiefung 64 ist eine Verdrehsicherung 68 untergebracht. Sie besteht aus einem Sicherungsblech 69, das über eine Schraube 70 mit der Antriebsspindel 13 verbunden ist und am Boden der Vertiefung 64 anliegt. Das Sicherungsblech 69 besitzt im Ausführungsbeispiel zwei ebene Seitenflächen 71 und 72, die beide parallel zur Drehachse 66 der Antriebsspindel 13 verlaufen. Die Fläche 72 liegt an der dem Druckstück 57 gegenüberliegenden Seitenwand der Vertiefung 64 an; die Fläche 71 ragt so in die zylindrische Bohrung 58 hinein, dass das Druckstück 57 nur um einen kleinen Winkel gedreht werden kann. In der Mittelstellung dieses Drehwinkels besitzen die ebenen Flächen 71 des Sicherungsbleches 69 und 61 des Druckstückes 57 einen geringen Abstand. Damit wird erreicht, dass beim Aufnehmen des Werkzeuges 4 die ebene Fläche 62 des Werkzeuges stets eine geeignete Lage der ebenen Fläche 61 des Druckstückes 57 vorfindet.

Das Werkzeug 4 kann beim Aufnehmen in den Kegelbuchsen 11, 12 mit der ebenen Fläche 62 an die ebene Fläche 61 des Druckstückes 57 angelegt werden. Dies ist aber nicht erforderlich, weil bei größeren Schnittbelastungen die beiden Ebenen ohnehin aufeinander zu bewegt werden und sich parallel zueinander stellen, so dass Kantentragen vermieden wird, also Flächenkontakt vorliegt.

Das Druckstück 57 kann nicht aus der Bohrung 58 herausfallen, weil die Kegelbuchse 11 mit ihrem kleinsten Innendurchmesser das Druckstück 57 zum Teil abdeckt; siehe Fig. 5.

Das Grundprinzip, nach dem die formschlüssige Kupplung 56 aufgebaut ist, lässt weiten Spielraum für die konstruktive Ausführung. Erwünscht sind vor allem ein großer Hebelarm e für die über das Druckstück 57 zu übertragende Kraft, große Kontaktfläche sowie zuverlässige Aufnahme des Werkzeuges 4 bei seiner Herstellung und zum Schärfen.

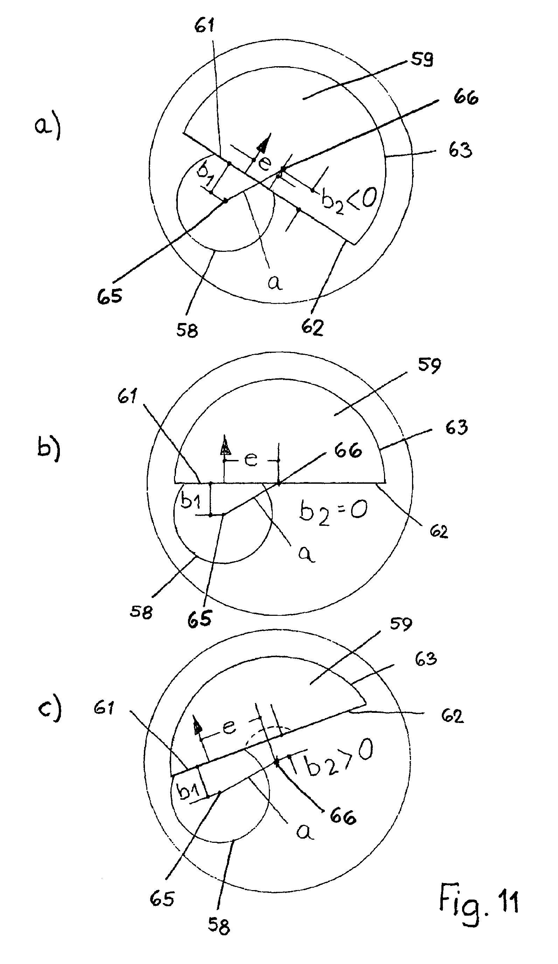

Hält man den Abstand a der Spindelachse 66 von der Achse 65 der zylindrischen Bohrung 58 und auch den Abstand b1 der Sehne im Stirnschnitt des Druckstückes 57 von der Achse 65 der zylindrischen Bohrung 58 zum Beispiel konstant, so erhält man deutlich unterschiedliche Hebelarme e für die zu übertragende Kraft, abhängig vom Abstand b2 der Sehne im Stirnschnitt des zylindrischen Zapfens 59 von der Drehachse 67 des Werkzeuges 4 bzw. der Drehachse 66 der Antriebsspindel 13. Die Figuren 11a bis 11c zeigen dazu drei Beispiele.

In den Beispielen nach den Figuren 11b und 11c lässt sich keine Zentrierbohrung zur Aufnahme des Werkzeuges 4 für das Schärfen mehr unterbringen. Für das Herstellen ist das unerheblich, weil die ebene Übertragungsfläche 62 am Zapfen 59 im nahezu letzten Fertigungsschritt erzeugt werden kann. Für das Schärfen des Werkzeuges 4 lässt sich eine Buchse mit Zentrierung einsetzen, die einen Innenkegel besitzt, der auf die kegelige Zentrierfläche 9 des Werkzeuges 4 aufgesetzt wird.

Bei Kupplungszapfen ähnlich Fig. 11c lässt sich auch eine Aussparung, zum Beispiel durch Fräsen, anbringen, um so Raum für eine Zentrierbohrung zu erhalten, wie es in Fig. 11c durch eine gestrichelte Linie angedeutet ist.

Außer dem Abstand b2 können auch der Abstand b1 und/oder der Abstand zwischen den beiden Achsen 65, 66 und/oder der Durchmesser der Bohrung 58 variiert werden, um so die Kupplung 56 optimal auf den vorgesehenen Anwendungsbereich abzustimmen.

Der Antriebsschlitten 2 lässt sich in Richtung der Führungsbahnen 5,6 verschieben. Der Antrieb dazu erfolgt von einem Motor 81 über eine Gewindespindel 82 und eine in einem Lagergehäuse 83 verschraubte Spindelmutter und eine mit dem Antriebsschlitten 2 verbundene Lasche 84. Der Motor 81 ist an ein Lagergehäuse 85 angeflanscht, das mit dem Gehäuse 1 verbunden ist. Das Lagergehäuse 85 enthält eine Kupplung zur Verbindung der Welle des Motors 81 mit der Gewindespindel 82.

Ein Winkelmesssystem 73 lässt sich am Ende der Antriebsspindel 13 leicht zugänglich montieren und warten (siehe Fig. 2).

Bei der vorgeschlagenen Lösung kommen Werkzeuge 4 zum Einsatz, die an beiden Enden kegelige Aufnahme- bzw. Zentrierflächen 9, 10 und an der Antriebsseite zusätzlich einen speziell ausgebildeten Antriebszapfen 59 besitzen (Fig. 8 bis 10). Dieser Zapfen 59 besitzt im Schnitt senkrecht zur Drehachse 67 des Werkzeuges 4 die Form eines Kreissegmentes. Dabei dient die ebene Fläche 62 der Übertragung des Antriebsmomentes.

Die Aufnahme des Werkzeuges 4 ist bei der vorgeschlagenen Lösung symmetrisch ausgebildet. Dadurch lässt sich ein Gegenlager 74 (Fig. 1) auf dem Gegenlagerschlitten 3 besonders steif gestalten. So können z. B. ein Lager 35 der Gegenlagerspindel 14 und ein Lager 34 der Antriebsspindel 13 werkzeugseitig gleich dimensioniert ausgeführt werden.

Die im Ausführungsbeispiel für einzelne Teilaufgaben beschriebenen Mittel können durch andere bekannte Mittel ersetzt werden. Dies betrifft zum Beispiel die Mittel zum Erzeugen einer axialen Kraft, zum Einstellen des Kraftbetrages, zum Aufnehmen des Werkzeuges oder zum Verschieben des Gegenlagerschlittens 3.

Die vorgeschlagene Lösung weist eine Reihe besonders positiver Merkmale auf:
- einfacher Werkzeugwechsel
- Entkoppelung der Werkzeugaufnahme von der Drehmomenteneinleitung
- geringe Axialkräfte ausreichend
- formschlüssige Kuppelung mit Flächenkontakt zum Werkzeugantrieb
- hohe Laufgenauigkeit des Werkzeuges
- verschleißunempfindliche Lösung
- Kraftspanneinrichtung an der Werkzeugspindel überflüssig, damit
- keine unwuchtträchtigen Teile aus einer Kraftspanneinrichtung
- geringe Baulänge
- Werkzeuge mit Bohrung über entsprechenden Dorn aufnehmbar
- einfache Montage und Wartung des Winkelmeßsystems
- thermisch bedingte Längenänderungen des Werkzeuges werden durch ein nachgiebiges Element, z.B. eine Feder, aufgenommen
- grobe Fertigungstoleranzen im Bereich der formschlüssigen Kupplung
- Werkzeuge mit deutlich unterschiedlicher Länge lassen sich problemlos aufnehmen

## Patentansprüche

1. Werkzeugkopf zur Aufnahme und zum Antrieb der Drehbewegung eines zweiseitig zu lagernden Werkzeuges (4), das in der Nähe seiner beiden Enden Zentrierflächen (9, 10) besitzt, die in drehbar ausgebildete Aufnahmebuchsen (11, 12) passen, von denen eine in einem Antriebsschlitten (2) und die andere in einem Gegenlager fluchtend zueinander angeordnet sind,
**dadurch gekennzeichnet, dass** das Gegenlager Teil eines Gegenlagerschlittens (3) ist, der zur Aufnahme des Werkzeuges (4) so weit auf den Antriebsschlitten (2) zu verschiebbar ist, dass das zwischen den beiden Schlitten (2, 3) befindliche Werkzeug (4) mit seinen Zentrierflächen (9, 10) in den Buchsen (11, 12) gehalten wird und dabei eine voreingestellte Axialkraft vorliegt, und ein Drehantriebsmotor (33) über eine im Antriebsschlitten (2) gelagerte Werkzeugspindel (13) und eine formschlüssige Kupplung (56) mit dem Werkzeug (4) verbunden ist.

2. Werkzeugkopf nach Anspruch 1,
**dadurch gekennzeichnet, dass** die radiale und axiale Aufnahme des Werkzeuges (4) von der Drehmomenteneinleitung entkoppelt ist.

3. Werkzeugkopf nach Anspruch 1 oder 2,
**dadurch gekennzeichnet, dass** die Zentrierflächen (9, 10) einteilig mit dem Werkzeug (4) ausgebildet sind.

4. Werkzeugkopf nach Anspruch 1 oder 2,
**dadurch gekennzeichnet, dass** die Zentrierflächen (9, 10) an einem Dorn vorgesehen sind, auf dem das Werkzeug (4) aufgenommen ist.

5. Werkzeugkopf nach einem der Ansprüche 1 bis 4,
**dadurch gekennzeichnet, dass** für das Verschieben des Gegenlagerschlittens (3) auf den Antriebsschlitten (2) zu und zum Erzeugen der axialen Vorspannkraft für das Werkzeug (4) die erforderliche Kraft zwischen den Schlitten (2, 3) über ein nachgiebiges Element (22) aufgebracht wird, so dass die Schlitten (2, 3) mit dem Werkzeug (4) eine Einheit bilden, die als Ganzes in Richtung der gemeinsamen Drehachse (66) von Antriebsspindel (13) und Gegenlagerspindel (14) verschoben werden kann und thermisch bedingte Längenänderungen des Werkzeuges (4) praktisch ohne Beeinflussung der Vorspannkraft aufnimmt.

6. Werkzeugkopf nach einem der Ansprüche 1 bis 5,
**dadurch gekennzeichnet, dass** der Antriebsschlitten (2) und der Gegenlagerschlitten (3) im Bereich des Anschlusses des Werkzeuges (4) symmetrisch aufgebaut sind.

7. Werkzeugkopf zur Aufnahme und zum Antrieb der Drehbewegung eines zweiseitig zu lagernden Werkzeuges (4), das in der Nähe seiner beiden Enden Zentrierflächen (9, 10) besitzt, die in drehbar ausgebildete Aufnahmebuchsen (11, 12) passen, von denen eine in einem eine Antriebsspindel (13) enthaltenden Antriebsschlitten (2) und die andere in einem Gegenlager fluchtend zueinander angeordnet sind,
**dadurch gekennzeichnet, dass** die zu kuppelnden Teile (57, 59) des Werkzeuges (4) und der Antriebsspindel (13) ebene Mitnahmeflächen (61, 62) besitzen, die sich unter Belastung so einstellen, dass sich flächenhafter Kontakt zwischen den Teilen (57, 59) ergibt.

8. Werkzeugkopf nach Anspruch 7,
**dadurch gekennzeichnet, dass** das Werkzeug (4) bis auf den Zapfen (59) neben der antriebsseitigen Zentrierfläche (9) spiegelsymmetrisch zu einer Ebene, die in der Mitte zwischen den Zentrierflächen (9) und (10) senkrecht zur Drehachse (67) des Werkzeuges (4) liegt, ausgebildet ist.

9. Werkzeug zum Einsatz in einem Werkzeugkopf nach einem der Ansprüche 1 bis 6 bzw. 7 und 8,
**dadurch gekennzeichnet, dass** das Werkzeug (4) als Schaftwerkzeug ausgebildet ist und, abgesehen von einem Antriebszapfen (59), symmetrisch bezüglich einer Ebene senkrecht zur Drehachse (67) in der Mitte eines Verzahnungshüllkörpers ausgebildet ist, und bei dem der Abstand der Zentrierfläche (9) vom Verzahnungshüllkörper auf der Antriebsseite so klein ist, wie der entsprechende Abstand auf der Gegenlagerseite mindestens sein muss.
